# EUROPEAN PATENT SPECIFICATION

(11) **EP 3 843 198 B1**
(45) Date of publication and mention of the grant of the patent: **15.02.2023**
(21) Application number: 19928305.2
(22) Date of filing: 03.10.2019
(51) Int. Cl.: H01M 10/613, H01M 10/643, H01M 10/6563, H01M 10/6565, H01M 10/6566, H01M 50/213

(54) **BATTERY MODULE, ELECTRIC POWER UNIT, AND WORK MACHINE**
BATTERIEMODUL, ELEKTRISCHE ANTRIEBSEINHEIT UND ARBEITSMASCHINE
MODULE DE BATTERIE, UNITÉ D'ALIMENTATION ÉLECTRIQUE ET MACHINE DE TRAVAIL

(43) Date of publication of application: 30.06.2021
(73) Proprietor: Honda Motor Co., Ltd., Tokyo 107-8556 (JP)
(72) Inventor: SUEYOSHI, Shunichiro, Wako-shi Saitama 3510193 (JP); MURAOKA, Keisuke, Wako-shi Saitama 3510193 (JP); NAGATANI, Shuji, Wako-shi Saitama 3510193 (JP)
(74) Representative: Beder, Jens
(86) International application number: PCT/JP2019/039153
(87) International publication number: WO 2021/064949

(56) References cited:
- EP-A1- 0 964 470
- EP-A1- 0 994 523
- EP-A1- 3 333 934
- JP-A- 2001 143 768
- JP-A- 2004 152 769
- JP-A- 2010 529 635
- JP-A- 2016 115 514
- JP-A- 2017 059 356
- JP-A- 2017 107 819
- JP-A- 2018 106 859

## Description

### TECHNICAL FIELD

The present invention relates to a battery module, an electric power unit, and a working machine.

### BACKGROUND ART

Japanese Patent No. 3742261 discloses an arrangement of a battery pack with a plurality of cells arranged therein, in which an outer case is provided with a suction port and an exhaust port, and a ventilation passage is formed where cooling air entering from the suction port passes around and/or between the plurality of cells and is exhausted from the exhaust port. In the arrangement described in PTL 1, a plurality of parts such as ribs for preventing rattling of the plurality of cells accommodated in the outer case, heat dissipation plates (formed with a plurality of fins) for efficiently cooling the outer cells, and flow straightening plates for guiding air to the exhaust port are attached to the plurality of cells.

EP 0 994 523 A1 and EP 0 964 470 A1 disclose a working machine and a battery module according to the preamble of claim 1.

### SUMMARY OF INVENTION

### TECHNICAL PROBLEM

In the arrangement described in Japanese Patent No. 3742261, the plurality of parts attached to the plurality of cells, such as the ribs, the heat dissipation plates, and the flow straightening plates, are independently formed (created). That is, with this arrangement, the number of parts to be independently formed increases. This complicates the device arrangement and can be disadvantageous in terms of device cost.

Therefore, the present invention has as its object to provide a battery module that can efficiently cool a plurality of battery cells and is advantageous in terms of simplification of the device arrangement and the device cost.

### SOLUTION TO PROBLEM

The problem is solved by a battery module, the electric power unit and the working machine according to the independent claims.

### ADVANTAGEOUS EFFECTS OF INVENTION

According to the present invention, it is possible to provide a battery module that can efficiently cool a plurality of battery cells and is advantageous in terms of simplification of the device arrangement and the device cost.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an arrangement example of a working machine;
Fig. 2 is an external view (top perspective view) of a battery module;
Fig. 3 is an external view (top view) of the battery module;
Fig. 4 is an external view (bottom perspective view) of the battery module;
Fig. 5 is an external view (bottom view) of the battery module;
Fig. 6 is an exploded view of the battery module;
Fig. 7 is a view of a lower member of an accommodation case when viewed from above (a state in which cell assemblies are not accommodated);
Fig. 8 is a view of the lower member of the accommodation case when viewed from above (a state in which the cell assemblies are accommodated);
Fig. 9 is an enlarged view of a region R in Fig. 8;
Fig. 10 is a view showing the flow of a gas in the accommodation case; and
Fig. 11 is a view showing the cell assembly and the lower member of the accommodation case.

### DESCRIPTION OF EMBODIMENTS

Embodiments of the present invention will now be described with reference to the accompanying drawings. Note that the drawings are schematic views showing a structure or an arrangement according to the embodiment, and the dimensions of members shown in the drawings do not necessarily reflect real dimensions. The same reference numerals denote the same elements in the drawing, and a description of repetitive contents will be omitted in this specification. In each of the following drawings, the directions orthogonal to each other on a plane parallel to the horizontal direction are the X direction and the Y direction, and the direction parallel to the vertical direction is the Z direction.

### <First Embodiment>

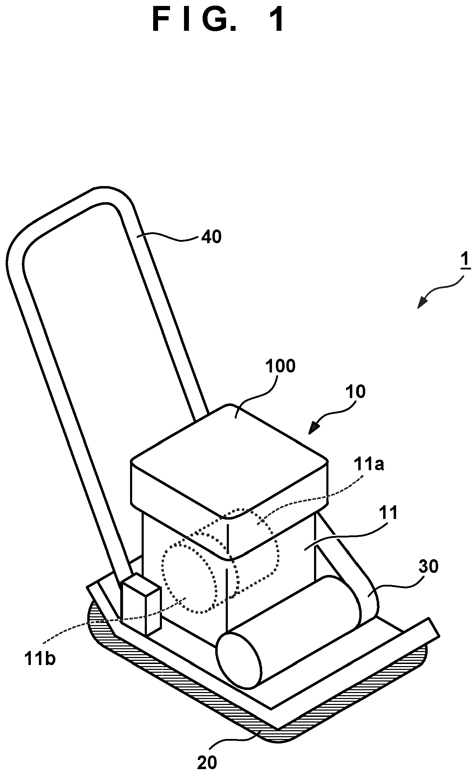

A working machine 1 of the first embodiment according to the present invention will be described. Fig. 1 is a schematic view showing an arrangement example of the working machine 1. The working machine 1 of this embodiment is a working machine (electric working machine) including an electric power unit 10 that includes a battery module 100 and a motor device 11. Examples of the working machine 1 include a plate compactor, a rammer, a lawn mower, a cultivator, and a snow remover, and Fig. 1 illustrates a plate compactor. The working machine 1 includes, for example, the electric power unit 10, a working unit 20 (working mechanism), a power transmission mechanism 30, and a steering handle 40. The working unit 20 is a unit for performing predetermined work, and in this embodiment, it is a unit that performs rolling compaction work to compact the ground.

The electric power unit 10 includes, for example, the battery module 100 and the motor device 11. The battery module 100 is a storage battery including a plurality of battery cells, and can be configured to be attachable/detachable to/from the motor device 11. The specific arrangement of the battery module 100 will be described later. The motor device 11 can include a motor 11a that is operated by electric power from the battery module 100, and a control unit (not shown) that controls driving of the motor. The control unit can be a PDU (Power Drive Unit), but may be configured to include a processor represented by a CPU, a storage device such as a semiconductor memory, an interface with an external device, and the like.

The motor device 11 is provided with a cooling fan 11b as an exhaust unit for exhausting the gas in an accommodation case 120 from exhaust holes formed in the accommodation case 120 of the battery module 100. The cooling fan 11b may also be used for cooling the motor 11a, or may be provided separately from a component for cooling the motor 11a. In this embodiment, the cooling fan 11b is rotatably attached to the shaft member of the motor 11a, and configured to rotate together with the shaft member of the motor 11a, thereby drawing the gas in the accommodation case 120 of the battery module 100 and exhausting the gas in the accommodation case 120 from the exhaust holes.

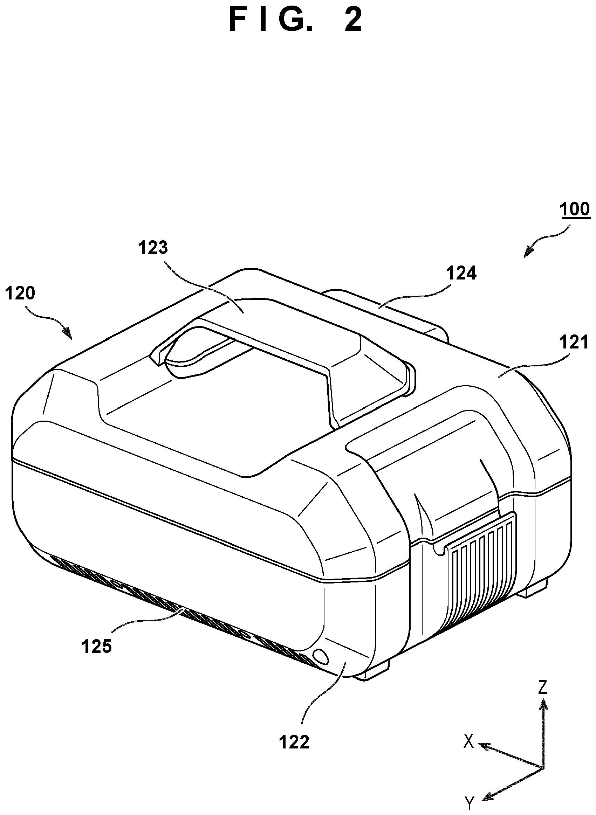

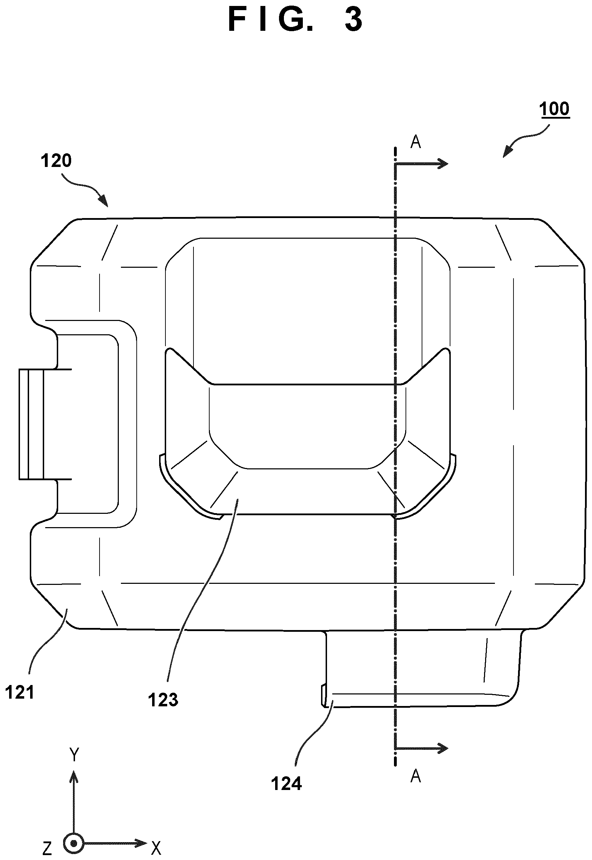

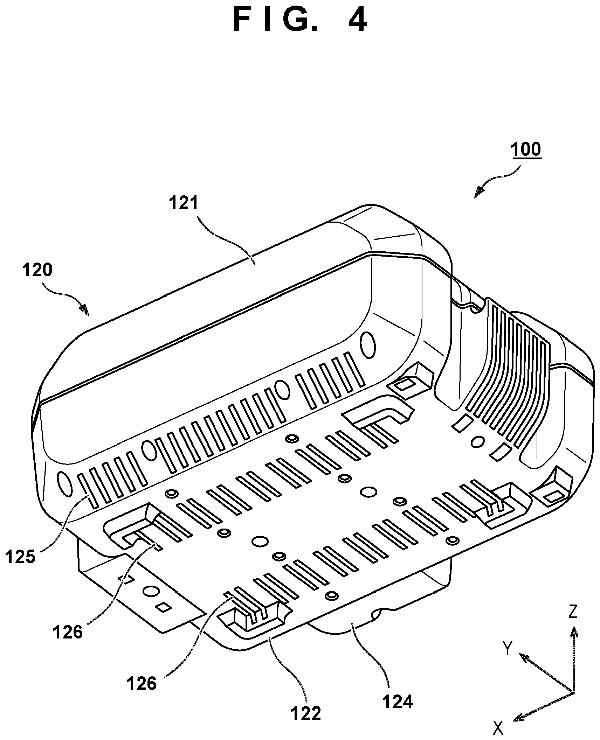

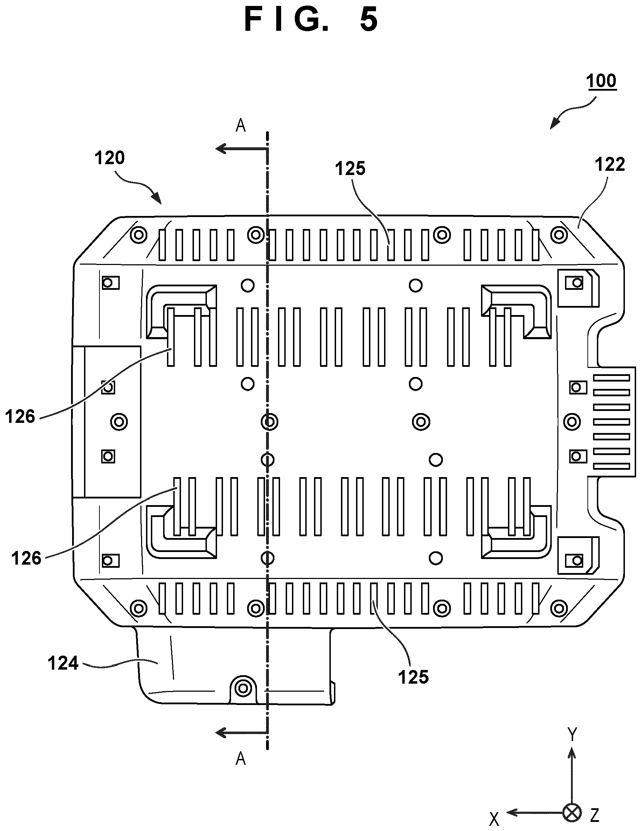

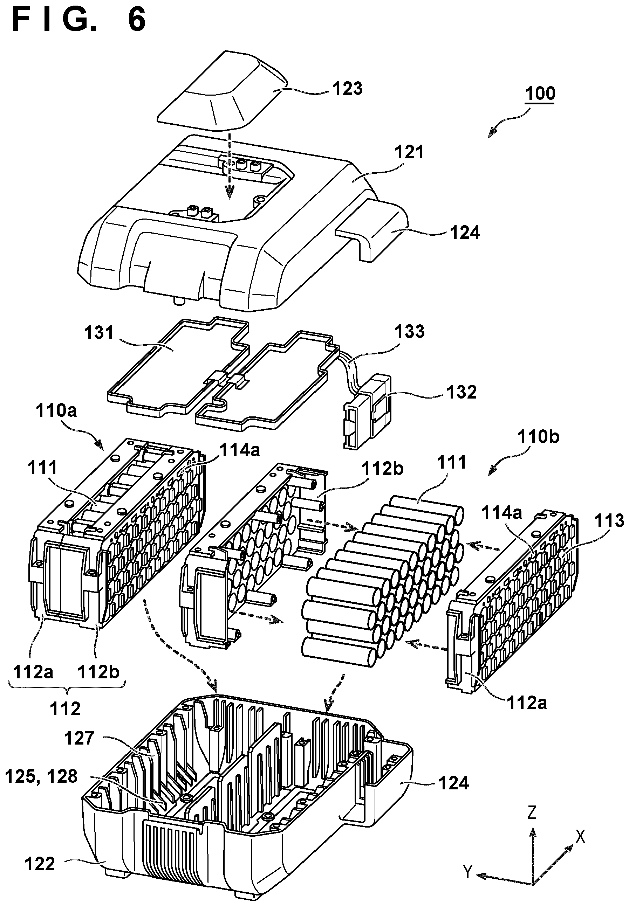

Next, the arrangement of the battery module 100 of this embodiment will be described. Each of Figs. 2 to 5 is an external view of the battery module 100. Fig. 2 shows a top perspective view of the battery module 100, Fig. 3 shows a top view of the battery module 100, Fig. 4 shows a bottom perspective view of the battery module 100, and Fig. 5 shows a bottom view of the battery module 100. Fig. 6 is an exploded view of the battery module 100.

As shown in Fig. 6, the battery module 100 includes cell assemblies 110 (110a, 110b) each including a plurality of cylindrical battery cells 111, the accommodation case 120 for accommodating the cell assemblies 110, a circuit board 131 on which a control circuit for controlling charge/discharge of the plurality of battery cells 111 is formed, and a connector 132 as an external interface. The circuit board 131 is arranged on the cell assemblies 110, and is electrically connected to the cell assemblies 110 (the plurality of battery cells 111) and the connector 132 via a cable 133. The connector 132 is arranged in a connector housing 124 provided in the accommodation case 120.

As shown in Fig. 6, each cell assembly 110 includes the plurality of battery cells 111 arrayed with the cell axes directed in one direction, and a holding portion 112 that holds the plurality of battery cells 111. Fig. 6 shows an arrangement example of the battery module 100 in which a plurality (two) of cell assemblies 110a and 110b having the same shape are symmetrically accommodated in the accommodation case 120. Fig. 6 shows the left cell assembly 110a in a state in which the plurality of battery cells 111 are held by the holding portion 112, and the right cell assembly 110b in a state before the plurality of battery cells 111 are held by the holding portion 112.

Each of the plurality of battery cells 111 has a columnar (cylindrical) shape, and the plurality of battery cells 111 are arrayed in a plurality of rows (ten rows) in the X direction and a plurality of stages (four stages) in the Z direction (second direction) while each cell axis (column axis) is directed in the Y direction (first direction). In this embodiment, the direction in which the cell axis of each battery cell 111 is directed is the Y direction (horizontal direction), but it is not limited to the Y direction (horizontal direction) as long as the cell axes of the respective battery cells 111 are directed in the same direction. Note that in the following description, the direction in which the cell axes of the plurality of battery cells 111 are directed may be referred to as the "first direction".

The holding portion 112 includes a pair of members (a first holding member 112a and a second holding member 112b) as frame bodies formed with a plurality of insertion ports 113 into which the plurality of battery cells 111 are respectively inserted. The first holding member 112a is located on the outer side of the holding portion 112 in the first direction (Y direction) (on the side of a peripheral space 142 to be described later), and the second holding member 112b is located on the inner side of the holding portion 112 in the first direction (on the side of the other cell assembly 110). In the first direction (Y direction) in which the cell axis of each battery cell 111 is directed, the first holding member 112a and the second holding member 112b sandwich the plurality of battery cells 111 such that each battery cell 111 is inserted into each insertion port 113, and in this state, the first holding member 112a and the second holding member 112b are fixed to each other using fixing members such as screws. Thus, the holding portion 112 can hold the plurality of battery cells 111.

The accommodation case 120 is configured to include two surfaces (for example, an upper surface and a lower surface) that sandwich the cell assemblies 110 in a direction different from the first direction (Y direction) in which the cell axis of each battery cell 111 is directed, more specifically, in the second direction (Z direction) which is a direction perpendicular to the first direction. In this embodiment, as shown in Figs. 2 to 6, the accommodation case 120 includes an upper member 121 including the upper surface and a lower member 122 including the lower surface. A handle member 123 is attached to an upper portion of the upper member 121 using fixing members such as screws. The plurality of cell assemblies 110 are inserted inside the lower member 122 and fixed thereto using fixing members such as screws. Then, the upper member 121 and the lower member 122 are stacked on each other and fixed to each other using fixing members such as screws.

Further, as shown in Figs. 4 and 5, suction holes 125 for taking a gas (air) for cooling the plurality of battery cells 111 into the accommodation case 120 and exhaust holes 126 for exhausting the gas having passed between the plurality of battery cells 111 are provided in the lower member 122 (the lower surface of the accommodation case 120). Since such the suction holes 125 and exhaust holes 126 are provided in the lower member 122, when the battery module 100 is attached to the motor device 11, the cooling fan 11b of the motor device 11 can draw the gas in the accommodation case 120 from the exhaust holes 126 of the accommodation case 120 so that the gas can be circulated in the accommodation case 120. Here, both the suction holes 125 and the exhaust holes 126 may be provided in the upper surface (upper member 121) of the accommodation case 120, but it is preferable to provide them in the lower surface (lower member 122) of the accommodation case 120 in terms of preventing rain and the like from entering the inside of the accommodation case 120.

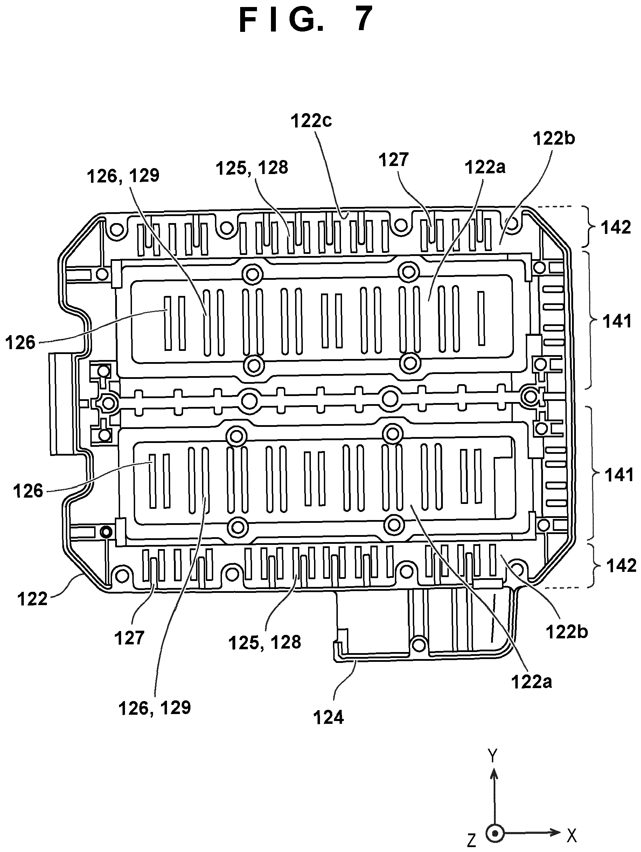

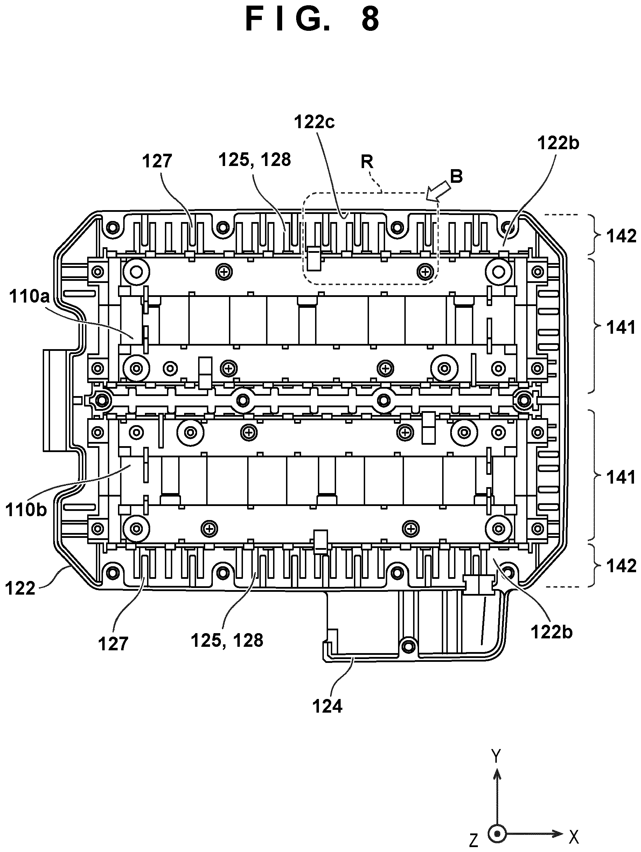

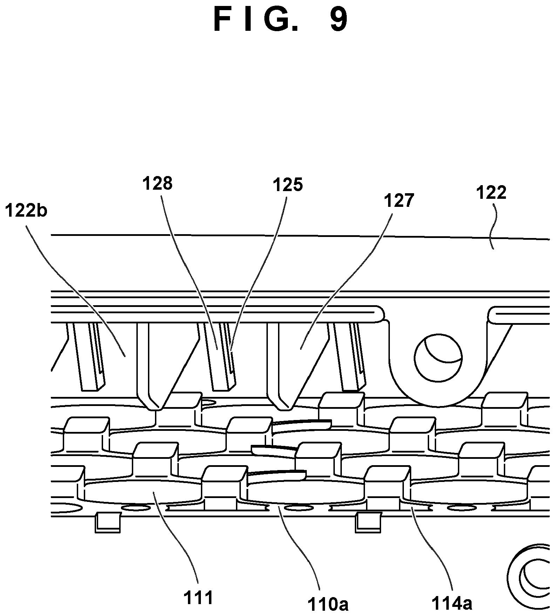

Each of Figs. 7 and 8 is a view of the lower member 122 of the accommodation case 120 when viewed from above (+Z direction). Fig. 7 is a view of the lower member 122 when viewed from above in a state in which the cell assemblies 110a and 110b are not accommodated. Fig. 8 is a view of the lower member 122 when viewed from above in a state in which the cell assemblies 110a and 110b are accommodated. Fig. 9 is an enlarged view of a region R in Fig. 8 when viewed from obliquely above as indicated by an arrow B.

The accommodation case 120 is configured to include an accommodation space 141 in which the cell assembly 110 is to be accommodated (arranged), and the peripheral space 142 located on the side of the cell assembly 110 in the first direction (Y direction). The suction holes 125 are provided in a surface included in the lower surface of the accommodation case 120 and defining the peripheral space 142, and the exhaust holes 126 are provided in a surface included in the lower surface of the accommodation case 120 and defining the accommodation space 141. More specifically, the lower surface of the accommodation case 120 (lower member 122) can include a mounting surface 122a, as the surface defining the accommodation space 141, on which the cell assembly 110 is mounted, and an inclined surface 122b, as the surface defining the peripheral space 142, which is inclined with respect to the mounting surface 122a on the side of the mounting surface 122a in the first direction. A plurality of the exhaust holes 126 arrayed along the X direction are provided in the mounting surface 122a, and a plurality of the suction holes 125 arrayed along the X direction are provided in the inclined surface 122b. Since the plurality of the suction holes 125 are provided in the inclined surface 122b, when the battery module 100 is attached above the member (for example, the motor device 11) including the cooling fan 1 1b, it is possible to arrange the plurality of the suction holes 125 so as to be spaced apart from the member. Thus, it is possible to prevent entry of rain and the like as described above without decreasing the suction efficiency.

Here, as shown in Fig. 9, the accommodation case 120 includes guard members 128, each of which extends in the longitudinal direction of the suction hole 125 and is provided inside the accommodation case 120 with respect to the suction hole 125. That is, the guard member 128 is a member that covers the suction hole 125 so as not to block the suction hole 125 in the inside of the accommodation case 120. By providing the guard member 128 to the suction hole 125 in this manner, the flow path that passes through the suction hole 125 can be formed in a labyrinth structure, so that it is possible to reduce entry of foreign substances such as wires into the accommodation case 120 from the suction hole 125. Similar to each suction hole 125, each exhaust hole 126 is provided with the guard member 129 so that a labyrinth structure can be formed.

Further, as shown in Figs. 6 to 9, the accommodation case 120 includes, in the peripheral space 142, a plurality of ribs 127 each extending in the second direction (Z direction) which is the array direction (stacking direction) of the plurality of battery cells 111. The plurality of ribs 127 can be provided to reinforce the accommodation case 120, but in this embodiment, they are arranged as baffle plates for guiding the gas taken into the peripheral space 142 from the suction holes 125 to the second direction (Z direction). For example, each of the plurality of ribs 127 is connected to a side surface 122c, that connects the upper surface and the lower surface of the accommodation case 120, and the lower surface (inclined surface 122b) of the accommodation case 120, and has a plate shape parallel to the first direction (Y direction) and the second direction (Z direction). Further, the plurality of ribs 127 are provided so as to be spaced apart from each other along the X direction such that at least one suction hole 125 is arranged therebetween.

By arranging the plurality of ribs 127 as baffle plates as described above, the gas taken into the peripheral space 142 from the plurality of suction holes 125 can be efficiently guided to the second direction, so that the plurality of battery cells 111 in the cell assembly 110 can be efficiently cooled. In addition, since the number of parts of the battery module 100 is reduced by making the plurality of ribs 127 function as the baffle plates, the device arrangement can be simplified and the device cost can be decreased.

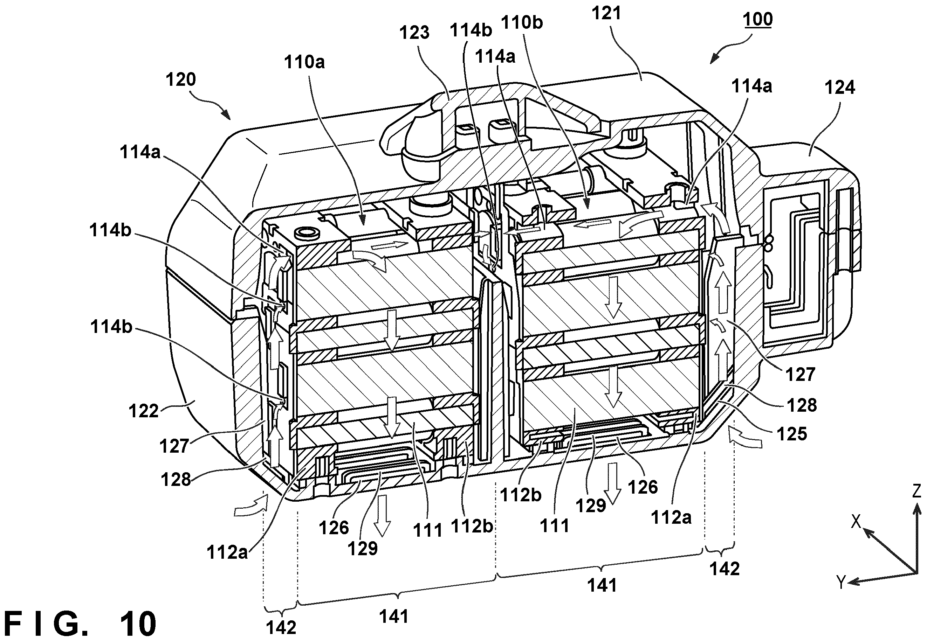

Next, the flow of the gas in the accommodation case 120 will be described. Fig. 10 is a perspective view of the Y-Z section (the section taken along A - A in Figs. 3 and 5) of the battery module 100. In Fig 10, the flow of the gas is indicated by arrows, and the size of the arrow represents the flow rate of the gas. Note that in the actual battery module 100, the circuit board 131 is arranged on the cell assemblies 110a and 110b as described above, but the circuit board 131 is not shown in Fig. 10 for clarity.

The gas taken into the peripheral space 142 from the plurality of suction holes 125 is guided to the second direction (+Z direction) toward the upper surface by the plurality of ribs 127 serving as the baffle plates. The gas guided by the plurality of ribs 127 in the peripheral space 142 is guided to gaps between the plurality of battery cells 111 (into the accommodation space 141) via a plurality of openings 114 (114a, 114b) formed in the first holding member 112a of the cell assembly 110, and exhausted from the plurality of exhaust holes 126. In this manner, in the battery module 100 of this embodiment, the suction holes 125 and the exhaust holes 126 are provided in the lower surface of the accommodation case 120 and airflows in opposite directions are generated in the accommodation space 141 and the peripheral space 142. Thus, the plurality of battery cells 111 arrayed in the accommodation space 141 can be efficiently cooled.

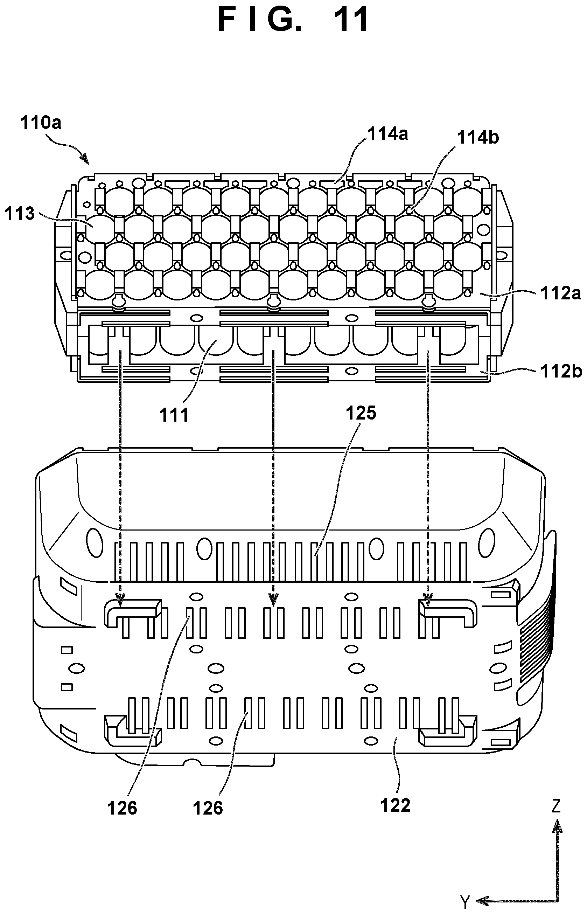

Here, the plurality of openings 114 formed in the first holding member 112a will be described. Fig. 11 is a view showing a state in which the cell assembly 110 (110a) is separated from the lower member 122 of the accommodation case 120 when viewed from obliquely below on the peripheral space 142 side. As shown in Figs. 6 and 11, a plurality of first openings 114a and a plurality of second openings 114b for guiding the gas from the peripheral space 142 to gaps between the plurality of battery cells 111 are formed in the first holding member 112a of this embodiment. Each of the plurality of first openings 114a has a shape (opening) larger than each of the plurality of second openings 114b, and is provided on the downstream side of the gas in the peripheral space 142, specifically, above the plurality of battery cells 111 (the plurality of insertion holes 113), more specifically, above the top battery cells 111. Further, the plurality of second openings 114b are provided on the upstream side of the gas in the peripheral space 142, specifically, between the plurality of battery cells 111 (the plurality of insertion ports 113). In the example shown in Fig. 11, the second openings 114b are provided at all positions between the plurality of battery cells 111, but the present invention is not limited to this, and they may be provided at some positions between the plurality of battery cells 111.

By forming such the first openings 114a and the second openings 114b in the first holding member 112a, as shown in Fig. 10, the gas guided to the second direction (+Z direction) by the plurality of ribs 127 in the peripheral space 142 can be efficiently guided to the first direction (Y direction), that is, to gaps between the plurality of battery cells 111. For example, the gas guided from the first openings 114a of the first holding member 112a to gaps between the plurality of battery cells 111 is warmed by the battery cells 111 arranged in the upper portion of the cell assembly 110 before being exhausted from the exhaust holes 126, so that the battery cells 111 arranged in the lower portion of the cell assembly 110 can be insufficiently cooled. In this embodiment, the second openings 114b are provided in the intermediate positions of the first holding member 112a in the second direction (+Z direction) to guide the gas from the second openings 114b to gaps between the plurality of battery cells 111, so that the battery cells 111 arranged in the lower portion of the cell assembly 110 can be efficiently cooled. On the other hand, when the second openings 114b are provided, the flow rate of the gas guided from the first openings 114a to gaps between the plurality of battery cells 111 can decrease. In this embodiment, since the second opening 114b has the smaller shape (opening) than the first opening 114a, the flow rate of the gas guided from the first openings 114a to gaps between the plurality of battery cells 111 can be secured. In addition, since the first openings 114a and the second openings 114b are formed in the frame body in which the insertion ports 113 for the battery cells 111 are formed, the gas guided to the first direction (+Y direction) can be efficiently guided to gaps between the plurality of battery cells 111.

As has been described above, in the battery module 100 of this embodiment, the plurality of ribs 127 in the accommodation case 120 are arranged as the baffle plates for guiding the gas taken in from the suction holes 125 to the second direction (+Z direction) in the peripheral space 142. With this arrangement, the gas (cooling air) taken in from the suction holes 125 is efficiently guided to the upper surface opposite to the lower surface provided with the suction holes 125, and is exhausted from the exhaust holes 126 provided in the lower surface on the same side as the suction holes 125. This can improve the cooling efficiently of the plurality of battery cells 111. In addition, since the number of parts of the battery module 100 is reduced by making the ribs 127 function as the baffle plates, the device arrangement can be simplified and the device cost can be decreased.

### <Other Embodiments>

In each of cell assemblies 110a and 110b, a plurality of openings 114 (first openings 114a and second openings 114b) may be formed in a second holding member 112b arranged on the inner side in a battery module 100, as in a first holding member 112a. In this case, as shown in Fig. 10, it is also possible to guide the gas to a gap between the plurality of cell assemblies 110a and 110b (between a plurality of accommodation spaces 141) via the first openings 114a of the second holding member 112b, and further guide the gas from the second openings 114b of the second holding member 112b to gaps between a plurality of battery cells 111. This can further improve the cooling efficiency of the battery cells 111 of the plurality of cell assemblies 110a and 110b.

In addition, in the battery module 100, an insulating member (for example, insulating paper) may be provided on the surface of a cell assembly 110 (first holding member 112a) on the peripheral space 142 side. In this case, openings are formed in the insulating member at positions corresponding to the first openings 114a and the second openings 114b in the first holding member 112a.

### <Summary of Embodiments>

1. The battery module according to the above-described embodiment comprises
   a cell assembly (for example, 110) including a plurality of battery cells (for example, 111) arrayed in a second direction different from a first direction while each cell axis is directed in the first direction, and
   an accommodation case (for example, 120) configured to accommodate the cell assembly,
   wherein in the accommodation case, a suction hole (for example, 125) configured to take a gas into a peripheral space (for example, 142) located on a side of the cell assembly in the first direction and an exhaust hole (for example, 126) configured to exhaust the gas having passed between the plurality of battery cells are provided in one surface of two surfaces that sandwich the cell assembly in the second direction, and a rib (for example, 127) extending in the second direction is provided in the peripheral space, and
   the rib is arranged as a baffle plate configured to guide the gas taken in from the suction hole to the second direction in the peripheral space.

   According to this arrangement, a gas taken in from the suction hole is efficiently guided to a surface opposite to the surface provided with the suction hole, and is exhausted from the exhaust hole (for example, 126) provided in a surface on the same side as the suction hole (for example, 125). This can improve the cooling efficiency of the plurality of battery cells. In addition, since the number of parts of the battery module is reduced by making the rib function as the baffle plate, the device arrangement can be simplified and the device cost can be decreased.
2. In the battery module according to the above-described embodiment,
   a plurality of the ribs are provided in the accommodation case, and at least one suction hole is provided between the plurality of the ribs.
   According to this arrangement, the gas taken into the accommodation case (into the peripheral space) from a plurality of the suction holes can be efficiently guided to the second direction by the plurality of ribs.
3. In the battery module according to the above-described embodiment,
   the rib extends in the second direction from a surface (for example, 122b) of the accommodation case in which the suction hole is provided.
   According to this arrangement, the gas taken into the accommodation case (into the peripheral space) from the suction hole can be efficiently guided to the second direction by the rib.
4. In the battery module according to the above-described embodiment,
   the rib is connected to a side surface (for example, 122c) connecting the two surfaces in the accommodation case.
   According to this arrangement, the rib serving as the baffle plate can be integrally formed with the accommodation case, so that the device arrangement can be simplified and the device cost can be decreased.
5. In the battery module according to the above-described embodiment,
   the cell assembly includes a holding member (for example, 112) configured to hold the plurality of battery cells,
   the holding member is formed by a pair of members (for example, 112a and 112b) that sandwich the plurality of battery cells in the first direction, and
   a member (for example, 112a) located on a side of the peripheral space out of the two members is provided with a plurality of openings (for example, 114) configured to guide the gas guided by the rib in the peripheral space to gaps between the plurality of battery cells.

   According to this arrangement, the gas guided by the rib in the peripheral space can be efficiently guided to gaps between the plurality of battery cells, so that the cooling efficiency of the plurality of battery cells can be improved.
6. In the battery module according to the above-described embodiment,
   the plurality of openings include a plurality of first openings (for example, 114a) provided on a downstream side of the gas in the peripheral space, and a plurality of second openings (for example, 114b) provided on an upstream side of the gas in the peripheral space, and
   each of the plurality of first openings is larger than each of the plurality of second openings.

   According to this arrangement, the plurality of second openings are provided, so that not only the gas warmed by the battery cells arranged on the side of the first openings but also the gas in the peripheral space can be supplied, via the plurality of second openings, to the battery cells arranged on the side (exhaust hole side) opposite to the side of the first openings. In addition, each first opening is formed larger than each second opening, so that the flow rate of the gas guided from the first opening to gaps between the plurality of battery cells can be secured. That is, the plurality of battery cells can be efficiently cooled as a whole.
7. In the battery module according to the above-described embodiment,
   the plurality of first openings and the plurality of second openings are formed in a frame body (for example, 112a or 112b) in which insertion ports for the plurality of battery cells are formed.
   With this arrangement, the gas guided to the first direction can be efficiently guided to gaps between the plurality of battery cells.
8. In the battery module according to the above-described embodiment,
   the accommodation case is configured to symmetrically accommodate a plurality of the cell assemblies, and
   of the pair of members forming each one of the plurality of the cell assemblies, the member (for example, 112b) located on a side of the other cell assembly is provided with a plurality of openings configured to guide the gas to a gap between the plurality of the cell assemblies.

   With this arrangement, the gas is supplied to the inner side of the accommodation case, so that the cooling efficiency of the battery cells of the plurality of the cell assemblies 110a and 110b can be further improved.
9. In the battery module according to the above-described embodiment,
   the plurality of the cell assemblies have the same shape.

With this arrangement, the cooling difference between the plurality of the cell assemblies can be decreased, and the manufacturing cost (design cost) of the holding portion that holds the plurality of battery cells can be reduced.

### REFERENCE SIGNS LIST

1: working machine, 10: electric power unit, 11: motor device, 100: battery module, 110: cell assembly, 111: battery cell, 112: holding portion, 120: accommodation case, 125: suction hole, 126: exhaust hole, 127; rib

## Claims

1. A battery module **characterized by** comprising:
a cell assembly (110, 110a, 110b) including a plurality of battery cells (111) arrayed in a second direction different from a first direction while each cell axis is directed in the first direction; and
an accommodation case (120) configured to accommodate the cell assembly (110, 110a, 110b),
wherein in the accommodation case (120), a suction hole (125) is provided in a surface defining a peripheral space (142) which is located on a side of the cell assembly (110, 110a, 110b) in the first direction, an exhaust hole (126) is provided in a surface defining an accommodation space (141) in which the cell assembly (110, 110a, 110b) is attached, and a rib (127) extending in the second direction is provided in the peripheral space (142),
the cell assembly (110, 110a, 110b) includes a holding member configured to hold the plurality of battery cells (111),
the holding member is formed by two members (112a, 112b) that sandwich the plurality of battery cells (111) in the first direction, and
a member located on a side of the peripheral space (142) out of the two members (112a, 112b) is provided with a plurality of openings (114, 114a, 114,b) configured to guide the gas in the peripheral space (142) to gaps between the plurality of battery cells (111)
**characterized in that**
the suction hole (125) and the exhaust hole (126) are provided in one surface of two surfaces that sandwich the cell assembly (110, 110a, 110b) in the second direction, and
the rib (127) is arranged as a baffle plate configured to guide the gas taken in from the suction hole (125) to the second direction in the peripheral space (142).

2. The battery module according to claim 1, **characterized in that**
the plurality of openings (114, 114a, 114,b) include a plurality of first openings (114a) provided on a downstream side of the gas in the peripheral space (142), and a plurality of second openings (114b) provided on an upstream side of the gas in the peripheral space (142), and
each of the plurality of first openings (114a) is larger than each of the plurality of second openings (114b).

3. The battery module according to claim 2, **characterized in that** the plurality of first openings (114a) and the plurality of second openings (114b) are formed in a frame body (112a, 112b) in which insertion ports for the plurality of battery cells (111) are formed.

4. The battery module according to any one of claims 1 to 3, **characterized in that**
the accommodation case (120) is configured to symmetrically accommodate a plurality of the cell assemblies (110, 110a, 110b), and
of the two members forming each one of the plurality of the cell assemblies (110, 110a, 110b), the member located on a side of the other cell assembly (110, 110a, 110b) is provided with a plurality of openings (114, 114a, 114,b) configured to guide the gas to a gap between the plurality of the cell assemblies (110, 110a, 110b).

5. The battery module according to claim 4, **characterized in that** the plurality of the cell assemblies (110, 110a, 110b) have the same shape.

6. The battery module according to claim 5, **characterized in that** a plurality of the ribs (127) are provided in the accommodation case (120), and at least one suction hole (125) is provided between the plurality of the ribs (127).

7. The battery module according to claim 5 or 6, **characterized in that** the rib (127) extends in the second direction from a lower surface of the accommodation case (120).

8. The battery module according to any one of claims 5 to 7, **characterized in that** the rib (127) is connected to a side surface connecting the two surfaces in the accommodation case (120).

9. An electric power unit **characterized by** comprising:
a battery module (100) defined in any one of claims 1 to 8, and
a motor (11) configured to be operated by power from the battery module (100).

10. The electric power unit according to claim 9, **characterized by** further comprising an exhaust unit configured to exhaust a gas in the accommodation case (120) of the battery module (100) from the exhaust hole (126).

11. A working machine **characterized by** comprising:
an electric power unit (10) defined in claim 9 or 10, and
a working unit (20) configured to perform work by power from the electric power unit (10).

## Patentansprüche

1. Ein Batteriemodul, **dadurch gekennzeichnet, dass** es Folgendes aufweist:
eine Zellenanordnung (110, 110a, 110b) mit einer Mehrzahl an Batteriezellen (111), die in einer sich von einer ersten Richtung unterscheidenden zweiten Richtung angeordnet sind, wobei die Achse einer jeden Zelle in die erste Richtung ausgerichtet ist; und
ein Aufnahmegehäuse (120), das zum Aufnehmen der Zellenanordnung (110, 110a, 110b) ausgebildet ist, wobei
in dem Aufnahmegehäuse (120) eine Ansaugöffnung (125) vorgesehen ist, in einer Oberfläche, die einen sich auf einer Seite der Zellenbaugruppe (110, 110a, 110b) in der ersten Richtung befindlichen peripheren Bereich (142) definiert, eine Auslassöffnung (126) vorgesehen ist, in einer Oberfläche, die einen die Zellenbaugruppe (110, 110a, 110b) aufnehmenden Aufnahmebereich (141) definiert, und eine Rippe (127) vorgesehen ist, die sich in dem peripheren Bereich (142) in der zweiten Richtung erstreckt,
die Zellenanordnung (110, 110a, 110b) ein Halteelement aufweist, das zum Halten der Mehrzahl an Batteriezellen (111) ausgebildet ist,
das Halteelement durch zwei Elemente (112a, 112b) gebildet wird, welche die Mehrzahl an Batteriezellen (111) in der ersten Richtung sandwichartig umschließen, und wobei
eines der beiden Elemente (112a, 112b), welches auf der Seite des peripheren Bereichs (142) angeordnet ist, mit einer Mehrzahl an Öffnungen (114, 114a, 114b) versehen ist, die so ausgebildet sind, dass sie das in dem peripheren Bereich (142) befindliche Gas zu Zwischenräumen zwischen der Mehrzahl an Batteriezellen (111) leiten,
**dadurch gekennzeichnet, dass**
die Ansaugöffnung (125) und die Auslassöffnung (126) in einer der beiden Oberflächen vorgesehen sind, die die Zellenanordnung (110, 110a, 110b) in der zweiten Richtung sandwichartig umschließen, und
die Rippe (127) als eine Leitplatte ausgebildet ist, derart, dass sie das von der Ansaugöffnung (125) angesaugte Gas in der zweiten Richtung in den peripheren Bereich (142) leitet.

2. Das Batteriemodul nach Anspruch 1, **dadurch gekennzeichnet, dass**
die Mehrzahl an Öffnungen (114, 114a, 114b) eine Mehrzahl an auf einer stromabwärtigen Seite des Gases in dem peripheren Bereich (142) vorgesehene erste Öffnungen (114a) aufweisen, sowie eine Mehrzahl an auf einer stromaufwärtigen Seite des Gases in dem peripheren Bereich (142) vorgesehene zweite Öffnungen (114b), wobei jede der Mehrzahl an ersten Öffnungen (114a) größer ist als jede der Mehrzahl an zweiten Öffnungen (114b).

3. Das Batteriemodul nach Anspruch 2, **dadurch gekennzeichnet, dass** die Mehrzahl an ersten Öffnungen (114a) und die Mehrzahl an zweiten Öffnungen (114b) in einem Rahmenkörper (112a, 112b) ausgebildet sind, in dem Einschuböffnungen für die Mehrzahl an Batteriezellen (111) ausgebildet sind.

4. Das Batteriemodul nach einem der Ansprüche 1 bis 3, **dadurch gekennzeichnet, dass**
das Aufnahmegehäuse (120) so ausgebildet ist, dass es eine Mehrzahl an Zellenanordnungen (110, 110a, 110b) symmetrisch aufnimmt, und
von den beiden Elementen, die jeweils eine der Mehrzahl an Zellenbaugruppen (110, 110a, 110b) bilden, das auf einer Seite der anderen Zellenbaugruppe (110, 110a, 110b) angeordnete Element mit einer Mehrzahl an Öffnungen (114, 114a, 114b) versehen ist, die so ausgebildet sind, dass sie das Gas zu einem Zwischenraum zwischen der Mehrzahl an Zellenbaugruppen (110, 110a, 110b) leiten.

5. Das Batteriemodul nach Anspruch 4, **dadurch gekennzeichnet, dass** die Mehrzahl an Zellenbaugruppen (110, 110a, 110b) die gleiche Form aufweisen.

6. Das Batteriemodul nach Anspruch 5, **dadurch gekennzeichnet, dass** in dem Aufnahmegehäuse (120) eine Mehrzahl an Rippen (127) vorgesehen sind, und zwischen der Mehrzahl an Rippen (127) zumindest eine Ansaugöffnung (125) vorgesehen ist.

7. Das Batteriemodul nach Anspruch 5 oder 6, **dadurch gekennzeichnet, dass** sich die Rippe (127) von einer Unterseite des Aufnahmegehäuses (120) in der zweiten Richtung erstreckt.

8. Das Batteriemodul nach einem der Ansprüche 5 bis 7, **dadurch gekennzeichnet, dass** die Rippe (127) mit einer die beiden Flächen des Aufnahmegehäuses (120) verbindenden Seitenfläche verbunden ist.

9. Eine elektrische Stromversorgungseinheit, **dadurch gekennzeichnet, dass** sie aufweist:
ein in einem der Ansprüche 1 bis 8 definiertes Batteriemodul (100), sowie
einen Motor (11), der so ausgebildet ist, dass er mit Strom aus dem Batteriemodul (100) betrieben werden kann.

10. Die elektrische Stromversorgungseinheit nach Anspruch 9, **dadurch gekennzeichnet, dass** sie ferner eine Auslasseinheit aufweist, die ausgebildet ist, um ein im Aufnahmegehäuse (120) des Batteriemoduls (100) befindliches Gas aus der Auslassöffnung (126) auszulassen.

11. Eine Arbeitsmaschine, **dadurch gekennzeichnet, dass** sie aufweist:
eine elektrische Stromversorgungseinheit (10) nach Anspruch 9 oder 10, sowie
eine Arbeitseinheit (20), die so ausgebildet ist, dass sie durch die Stromzufuhr der elektrischen Stromversorgungseinheit (10) Arbeit verrichtet.

## Revendications

1. Module de batterie **caractérisé en ce qu'**il comprend :
un ensemble d'éléments (110, 110a, 110b) comportant une pluralité d'éléments de batterie (111) disposés dans une deuxième direction différente d'une première direction tandis que chaque axe d'élément est dirigé dans la première direction ; et
un boîtier de logement (120) configuré pour loger l'ensemble d'éléments (110, 110a, 110b),
dans lequel, dans le boîtier de logement (120), un trou d'aspiration (125) est prévu dans une surface définissant un espace périphérique (142) qui est situé sur un côté de l'ensemble d'éléments (110, 110a, 110b) dans la première direction, un trou d'échappement (126) est prévu dans une surface définissant un espace de logement (141) dans lequel l'ensemble d'éléments (110, 110a, 110b) est fixé, et une nervure (127) s'étendant dans la deuxième direction est prévue dans l'espace périphérique (142),
l'ensemble d'éléments (110, 110a, 110b) comporte un organe de maintien configuré pour maintenir la pluralité d'éléments de batterie (111),
l'organe de maintien est formé par deux organes (112a, 112b) qui prennent en sandwich la pluralité d'éléments de batterie (111) dans la première direction, et
un organe situé sur un côté de l'espace périphérique (142) parmi les deux organes (112a, 112b) est pourvu d'une pluralité d'ouvertures (114, 114a, 114b) configurées pour guider le gaz dans l'espace périphérique (142) vers des écarts entre la pluralité d'éléments de batterie (111)
**caractérisé en ce que**
le trou d'aspiration (125) et le trou d'échappement (126) sont prévus dans une surface de deux surfaces qui prennent en sandwich l'ensemble d'éléments (110, 110a, 110b) dans la deuxième direction, et
la nervure (127) est agencée en tant que déflecteur configuré pour guider le gaz aspiré par le trou d'aspiration (125) vers la deuxième direction dans l'espace périphérique (142).

2. Module de batterie selon la revendication 1, **caractérisé en ce que**
la pluralité d'ouvertures (114, 114a, 114b) comportent une pluralité de premières ouvertures (114a) prévues sur un côté aval du gaz dans l'espace périphérique (142), et une pluralité de deuxièmes ouvertures (114b) prévues sur un côté amont du gaz dans l'espace périphérique (142), et
chacune de la pluralité de premières ouvertures (114a) est plus grande que chacune de la pluralité de deuxièmes ouvertures (114b).

3. Module de batterie selon la revendication 2, **caractérisé en ce que** la pluralité de premières ouvertures (114a) et la pluralité de deuxièmes ouvertures (114b) sont formées dans un corps de cadre (112a, 112b) dans lequel des orifices d'insertion pour la pluralité d'éléments de batterie (111) sont formés.

4. Module de batterie selon l'une quelconque des revendications 1 à 3, **caractérisé en ce que**
le boîtier de logement (120) est configuré pour loger symétriquement une pluralité d'ensembles d'éléments (110, 110a, 110b), et
des deux organes formant chacun de la pluralité d'ensembles d'éléments (110, 110a, 110b), l'organe situé sur un côté de l'autre ensemble d'éléments (110, 110a, 110b) est pourvu d'une pluralité d'ouvertures (114, 114a, 114b) configurées pour guider le gaz vers un écart entre la pluralité d'ensembles d'éléments (110, 110a, 110b).

5. Module de batterie selon la revendication 4, **caractérisé en ce que** la pluralité d'ensembles d'éléments (110, 110a, 110b) ont la même forme.

6. Module de batterie selon la revendication 5, **caractérisé en ce qu'**une pluralité de nervures (127) sont prévues dans le boîtier de logement (120), et au moins un trou d'aspiration (125) est prévu entre la pluralité de nervures (127).

7. Module de batterie selon la revendication 5 ou 6, **caractérisé en ce que** la nervure (127) s'étend dans la deuxième direction à partir d'une surface inférieure du boîtier de logement (120).

8. Module de batterie selon l'une quelconque des revendications 5 à 7, **caractérisé en ce que** la nervure (127) est reliée à une surface latérale reliant les deux surfaces dans le boîtier de logement (120).

9. Unité de puissance électrique **caractérisée en ce qu'**elle comprend :
un module de batterie (100) défini dans l'une quelconque des revendications 1 à 8, et
un moteur (11) configuré pour être actionné par une puissance provenant du module de batterie (100).

10. Unité de puissance électrique selon la revendication 9, **caractérisée en ce qu'**elle comprend en outre une unité d'échappement configurée pour évacuer un gaz dans le boîtier de logement (120) du module de batterie (100) à partir du trou d'échappement (126).

11. Machine de travail **caractérisée en ce qu'**elle comprend :
une unité de puissance électrique (10) définie dans la revendication 9 ou 10, et
une unité de travail (20) configurée pour réaliser un travail grâce à la puissance provenant de l'unité de puissance électrique (10).
